# EUROPEAN PATENT APPLICATION

(11) **EP 4 757 323 A1**
(43) Date of publication of application: **10.06.2026**
(21) Application number: 24848334.9
(22) Date of filing: 01.08.2024
(51) Int. Cl.: H04N 21/431

(54) **IMAGE PROCESSING METHOD AND APPARATUS, AND ELECTRONIC DEVICE**

(30) Priority: 01.08.2023 CN 202310963964
(71) Applicant: Chengdu Guanghexinhao Technology Co., Ltd., Chengdu, Sichuan 610095 (CN)
(72) Inventor: CAI, Yangming, Beijing 100028 (CN); ZHANG, Shengya, Beijing 100028 (CN); YANG, Ting, Beijing 100028 (CN)
(74) Representative: Marks & Clerk LLP
(86) International application number: PCT/CN2024/109117
(87) International publication number: WO 2025/026379

(57) **Abstract**

Embodiments of the present disclosure provide an information processing method and apparatus, and an electronic device. The method comprises: when displaying a first video stream in a single-column display mode, displaying display mode switching information; and on the basis of a received trigger operation executed on the display mode switching information, displaying a second video stream in a double-column display mode. The embodiments of the present disclosure provide a channel for rapid switching from the single-column display mode to the double-column display mode, so that the problem that a display mode is single is solved, and the efficiency of acquiring information by a user is improved.

## Description

The present disclosure claims priority to Chinese Patent Application No. 202310963964.5, filed on August 1, 2023, which is incorporated herein by reference in its entirety as a part of the present disclosure.

### TECHNICAL FIELD

Embodiments of the present disclosure relate to an information processing method and apparatus, and an electronic device.

### BACKGROUND

With the development of multimedia technologies, more and more video producers can produce short videos and publish them on the Internet. Users may use terminal devices such as mobile phones to browse these videos published on the Internet. Typically, a plurality of videos can be played in the form of video streams at terminal devices.

### SUMMARY

Embodiments of the present disclosure provide an information processing method and apparatus, and an electronic device.

According to a first aspect, an embodiment of the present disclosure provides an information processing method. The method includes:
presenting display mode switching information when a first video stream is displayed in a single-column display mode; and
displaying a second video stream in a double-column display mode based on a received trigger operation that is performed on the display mode switching information.

According to a second aspect, an embodiment of the present disclosure provides an information processing apparatus. The apparatus includes:
a first display unit configured to present display mode switching information when a first video stream is displayed in a single-column display mode, and
a second display unit configured to display a second video stream in a double-column display mode based on a received trigger operation that is performed on the display mode switching information.

According to a third aspect, an embodiment of the present disclosure provides an electronic device. The electronic device includes: a processor and a memory; where
the memory has computer-executable instructions stored therein; and
the processor executes the computer-executable instructions stored in the memory to cause the at least one processor to perform the information processing method according to the first aspect and various possible designs of the first aspect.

According to a fourth aspect, an embodiment of the present disclosure provides a computer-readable storage medium. The computer-readable storage medium has computer-executable instructions stored therein that, when executed by a processor, cause the information processing method according to the first aspect and various possible designs of the first aspect to be implemented.

According to a fifth aspect, an embodiment of the present disclosure provides a computer program product including a computer program that, when executed by a processor, causes the information processing method according to the first aspect and various possible designs of the first aspect to be implemented.

### BRIEF DESCRIPTION OF DRAWINGS

In order to more clearly describe the technical solutions in the embodiments of the present disclosure or in the related art, the accompanying drawings for describing the embodiments or the related art will be briefly described below. Apparently, the accompanying drawings in the description below show the embodiments of the present disclosure, and those of ordinary skill in the art may still derive other accompanying drawings from these accompanying drawings without creative efforts.
Fig. 1 is a schematic diagram of video stream display according to an embodiment of the present disclosure;
Fig. 2 is a first schematic flowchart of an information processing method according to an embodiment of the present disclosure;
Fig. 3 is a second schematic flowchart of an information processing method according to an embodiment of the present disclosure;
Fig. 4 is a schematic diagram of an application scenario according to an embodiment of the present disclosure;
Fig. 5 is a schematic diagram of an application scenario according to an embodiment of the present disclosure;
Fig. 6 is a schematic diagram of an application scenario according to an embodiment of the present disclosure;
Fig. 7 is a schematic diagram of an application scenario according to an embodiment of the present disclosure;
Fig. 8 is a schematic diagram of an application scenario according to an embodiment of the present disclosure;
Fig. 9 is a schematic structural diagram of an information processing apparatus according to an embodiment of the present disclosure; and
Fig. 10 is a schematic structural diagram of hardware of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

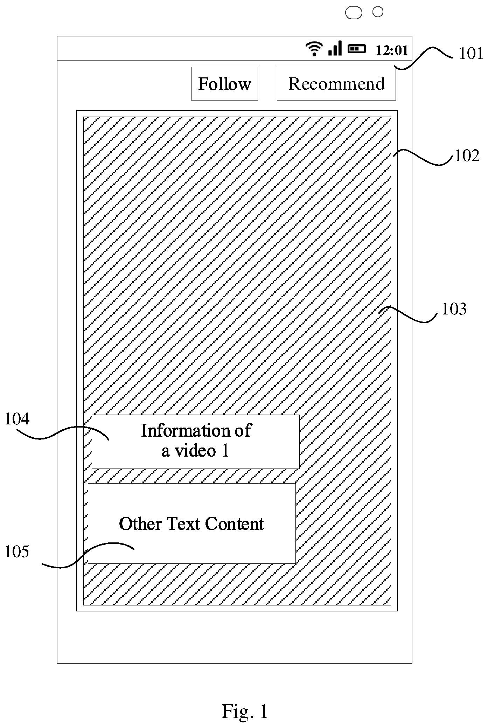

In a solution provided in the present disclosure, referring to Fig. 1, Fig. 1 is a schematic diagram of video stream display according to the present disclosure. A video playback client may present a video stream in a single-column display mode in a first display interface 101. The single-column display mode, also known as an immersive presentation mode, refers to presenting a plurality of videos in a one-column presentation form in the above-mentioned client interface. As shown in Fig. 1, a screen of a video 103 in the video stream is currently presented in the single-column display mode. Furthermore, in addition to displaying a screen of a video 1, the first display interface 101 may also display information 104 of the video 1 such as identification and introduction of the video 1, and may also display another text content 105 related to the release of the video 1.

In the single-column display mode, a user may switch between videos by a swipe operation.

In the single-column display mode, a video stream presented by the client may be a video stream pushed to the user by a server. The client passively presents videos, one by one, in the video stream pushed by the server. Therefore, in this solution, the display mode of the video stream is single, and furthermore, it is not convenient for the user to search for required videos from the video stream for viewing.

In the solution provided in the present disclosure, mode switching information is displayed when the video stream is presented in the single-column display mode, and through a trigger operation performed by the user on the above-mentioned display mode switching information, video information is displayed in a double-column display mode, which on the one hand, alleviates the problem of a single display mode, and on the other hand, in the double-column display mode, facilitates the user's search for videos in the video stream, thereby improving user experience.

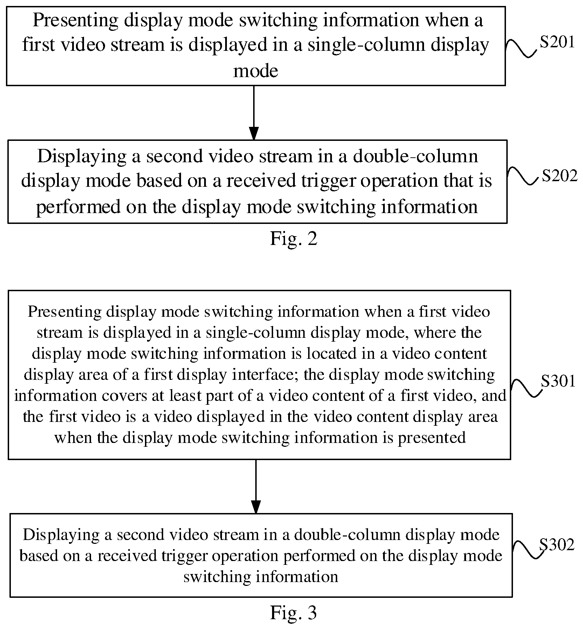

Referring to Fig. 2, Fig. 2 is a first schematic flowchart of an information processing method according to an embodiment of the present disclosure. The method in this embodiment may be applied to a terminal device or a server. The information processing method includes the following steps.

S201: presenting display mode switching information when a first video stream is displayed in a single-column display mode.

In this embodiment, an execution entity of the information processing method may be a terminal device or a server.

In this embodiment, the first video stream may be displayed on a first display interface of the terminal device in the single-column display mode.

The single-column display mode refers to presenting a plurality of videos in a one-column presentation form in the above-mentioned client interface, and specifically may be an immersive presentation mode. As shown in Fig. 1, the first display interface 101 may display section information, which may be, for example, "Follow" and "Recommend" in Fig. 1. When the user performs a trigger operation on one of the above-mentioned section information, a first video stream corresponding to the section information may be displayed in the first display interface 101.

When one of the video contents in the first video stream is displayed in the single-column display mode, the user may perform a swipe operation, for example, swiping up and down or swiping left and right with a finger or a stylus on a touch screen. After receiving the above-mentioned swipe operation of the user, the above-mentioned execution entity may switch a video displayed in the first display interface 101.

When the first video stream is displayed in the single-column display mode, the first video stream pushed to the user is determined by the server, and the user passively browses the video contents in the first video stream pushed by the server, and cannot select a specific video for viewing in detail.

In some embodiments, the first video stream may include videos belonging to different classification labels.

Typically, after a video design user posts a video (for example, a short video) on the Internet, the server may set a classification label for the video posted by the user based on content of the video.

By setting videos with different classification labels in the first video stream, videos of different categories may be presented to users.

When the video content of any video in the first video stream is presented in the single-column display mode, the display mode switching information may be presented in the first display interface displaying the first video stream. The above-mentioned display mode switching information is used to switch from the single-column display mode to a double-column display mode.

The above-mentioned display mode switching information may be presented in various presentation manners.

S202: displaying a second video stream in a double-column display mode based on a received trigger operation that is performed on the display mode switching information.

The first video stream may be a video stream corresponding to a plurality of videos, and the second video stream may be a video stream corresponding to a plurality of videos. The videos in the first video stream may be the same as or different from, or partially the same as the videos in the second video stream. The first video stream and the second video stream may be video streams of the same type, for example video streams of a recommendation type.

In the present disclosure, the display mode switching information, when being triggered, may be used to switch a display mode of the video stream. A switching control may be a button configured to switch a video stream display mode. A switching card may be a card configured to switch the video stream display mode.

Video recommendation information may be displayed on the switching card, and the video recommendation information may include a video cover, a video description, a video name, and other information.

After the display mode switching information is presented at step S201, the user may perform the trigger operation, such as a click or touch operation, on the display mode switching information.

The execution entity may switch the display mode from the single-column display mode to the double-column display mode based on the received trigger operation that is performed on the display mode switching information. After the display mode is switched from the single-column display mode to the double-column display mode, the second video stream may be displayed in the double-column display mode.

The double-column display mode refers to displaying information of the second video stream in the form of two columns of recommendation lists on the display interface. The double-column display mode supports the user to browse information of a plurality of videos in the recommendation list and select contents of interest from the plurality of videos for viewing.

The second video stream may be the same video stream as the first video stream, or may be a different video stream from the first video stream.

In this embodiment, the display mode switching information is presented when the first video stream is displayed in the single-column display mode; and the second video stream is displayed in the double-column display mode based on the received trigger operation that is performed on the display mode switching information. A channel for rapid switching from the single-column display mode to the double-column display mode is provided, so that on the one hand, the problem of having a single display mode is alleviated, and on the other hand, displaying the second video stream in the double-column display mode is beneficial to improve the information acquisition efficiency of the user. In addition, the double-column display mode makes it convenient for the user to search for videos, which can improve user experience.

Referring to Fig. 3, a second schematic flowchart of an information processing method according to an embodiment of the present disclosure is shown. The method in this embodiment may be applied to a terminal device or a server. As shown in Fig. 3, the information processing method includes the following steps.

S301: presenting display mode switching information when a first video stream is displayed in a single-column display mode, where the display mode switching information is located in a video content display area of a first display interface; the display mode switching information covers at least part of a video content of a first video, and the first video is a video displayed in the video content display area when the display mode switching information is presented.

S302: displaying a second video stream in a double-column display mode based on a received trigger operation that is performed on the display mode switching information.

An execution entity of this embodiment may be the terminal device or the server.

In this embodiment, the first display interface is configured to display the first video stream. The first video is a video in the first video stream.

The first video stream is displayed in the single-column display mode in the first display interface. The first video stream may be displayed in a video content display area of the first display interface. When the first video in the first video stream is displayed in the video content display area, the execution entity may present the display mode switching information in the video content display area.

The display mode switching information may cover at least part of the video content of the first video.

In some application scenarios, the display mode switching information may cover part of the video content of the first video.

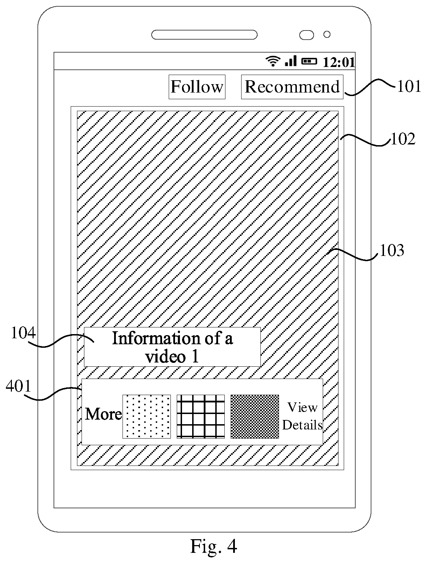

Referring to Fig. 1 and Fig. 4 together, Fig. 4 is a schematic diagram of an application scenario according to an embodiment of the present disclosure. As shown in Fig. 1, the first video 103 in the first video stream may be displayed in a video content display area 102 in the first display interface 101. A video content of the first video 103 includes an image content, the text information 104 of the video 1 presented in the image content, and the other text content 105 related to the video 1. When the display mode switching information is presented, the display mode switching information may cover the other text content in the first video 103. As shown in Fig. 4, the display mode switching information 401 covers the other text content 105 in Fig. 1.

In these embodiments, the mode switching information is displayed by means of covering the part of the video content, so that on the one hand, a channel for rapid switching from the single-column display mode to the double-column display mode is provided to the user, so as to facilitate selection of a target video from a plurality of videos by the user in the double-column display mode for viewing; on the other hand, the video content of the first video may also be presented to the user.

In some application scenarios, the display mode switching information may cover the entire video content of the first video.

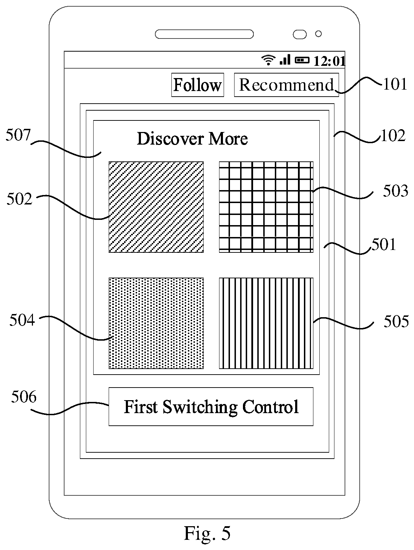

Referring to Fig. 1 and Fig. 5 together, Fig. 5 is a schematic diagram of an application scenario according to an embodiment of the present disclosure. As shown in Fig. 1, the first video 103 may be displayed in the video content display area 102 in the first display interface 101. The video content of the first video 103 includes the image content, the text information 104 of the video 1 presented in the image content, and the other text content 105. When the display mode switching information is presented, as shown in Fig. 5, display mode switching information 501 covers the entire content of the first video 103 in Fig. 1.

In these embodiments, the mode switching information is displayed in the video content display area by means of covering the entire content of the first video 103, so that the display mode switching information is presented to the user in a noticeable manner, thereby facilitating switching from the single-column display mode to the double-column display mode for the user.

In some embodiments, the display mode switching information includes a switching card and/or a first switching control, where the switching card includes video recommendation information.

In some application scenarios, the display mode switching information includes a switching card.

Schematically, the video recommendation information includes cover information respectively corresponding to at least two videos.

Referring to the display mode switching information 401 shown in Fig. 4, the display mode switching information 401 may be the switching card. The switching card includes the video recommendation information. The video recommendation information may include, for example, cover information of a video, brief introduction information of the video, and the like.

In these application scenarios, the video recommendation information may be set on the switching card, so that the user can intuitively grasp content overviews of videos displayed in the double-column display mode after switching. It is convenient for the user to determine whether to switch to the double-column display mode.

In some application scenarios, the display mode switching information includes the first switching control.

As shown in Fig. 5, the switching information 501 includes a first switching control 506. The user may tap the first switching control 506 to achieve switching from the current single-column display mode to the double-column display mode. Setting the first switching control in the display mode switching information aligns with user's operating habits.

In some application scenarios, the display mode switching information may further include the switching card and the first switching control. As shown in Fig. 5, the display mode switching information includes a switching card 507 and the first switching control 506.

Here, the first switching control is a button configured to achieve switching from the single-column display mode to the double-column display mode. After a trigger operation on the first switching control is received, the execution entity may be triggered to perform a switching operation for switching from the single-column display mode to the double-column display mode.

In these application scenarios, recommendation information in the switching card 507 in Fig. 5 may include cover information 502 of the video 1, cover information 503 of a video 2, cover information 504 of a video 3, and cover information 505 of a video 4. The cover information 502 of the video 1, the cover information 503 of the video 2, the cover information 504 of the video 3, and the cover information 505 of the video 4 may be set in a pre-edited card container according to a preset sorting rule, to form the switching card 507.

The switching card and the first switching control are set in the display mode switching information, so that the user can achieve switching from the single-column display mode to the double-column display mode by tapping the switching card, or achieve switching from the single-column display mode to the double-column display mode by tapping the first switching control. Therefore, it is convenient for the user to perform the switching operation.

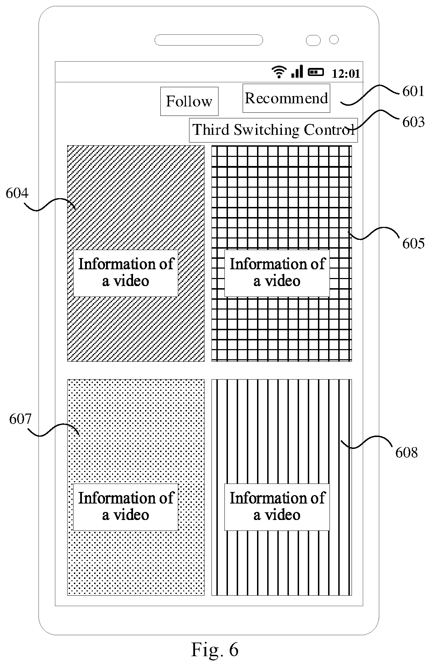

Referring to Fig. 6, Fig. 6 is a schematic diagram of an application scenario according to an embodiment of the present disclosure. As shown in Fig. 6, after switching from the single-column display mode to the double-column display mode is achieved, information of a plurality of videos may be displayed in double columns on a display interface 601. As shown in Fig. 6, the display interface 601 may display video information 604, 605, 607, and 608 of a plurality of videos in double columns. Video information of each video may include cover information, or a video content in a playing state.

Compared with Fig. 2, this embodiment describes that the display mode switching information is displayed in the video content display area, covering at least part of the video content in the first video stream, so as to prompt the user in a noticeable manner, by using the display mode switching information, to switch from the single-column display mode to the double-column display mode, which facilitates switching of the display mode from the single-column display mode to the double-column display mode for the user.

In some embodiments, the video content display area presents the display mode switching information when displaying the first video in the first video stream, where a plurality of videos in the second video stream belong to the same category label as the first video.

The first video here may be any video in the first video stream, and does not refer to a specific video. It should be understood that the display mode switching information may be presented when any video in the first video stream is displayed. Here, a video displayed when the display mode switching information is presented may be referred to as the first video.

A plurality of videos in the second video stream displayed in the double-column display mode may have the same category label as the first video.

In these embodiments, when the user performs a trigger operation on the display mode switching information displayed when the first video is displayed in the single-column display mode, so that the second video stream consisting of a plurality of videos belonging to the same category label as the first video is displayed in the double-column display mode, more videos corresponding to the category label may be provided to the user for browsing and selecting.

In some optional implementations of this embodiment, a first-positioned video(the first one) in the second video stream is the first video.

The first video is a video, in the first video stream, that is displayed when the display mode switching information is presented.

In these embodiments, the plurality of videos in the second video stream may be videos belonging to the same category label as the first video. The first displayed video in the second video stream is set as the above-mentioned first video in the first video stream, so that on the one hand, it is possible to reduce difference in viewing experience due to difference in video stream content after the first video stream is switched to the second video stream; on the other hand, the user can also grasp content information of other videos in the second video stream based on a video content of the first-positioned video. Since the user performs display mode switching based on the display mode switching information when the video content of the first video is presented, displaying in the second video stream a plurality of videos belonging to the same category label as the first video can provide the user with more video information belonging to the same category label as the first video for the user to browse and select, which can improve user experience to some extent.

In some optional implementations of the embodiments shown in Fig. 2 and Fig. 3, the display mode switching information includes a second switching control; the second switching control is located in a non-video content display area of the first display interface displaying the first video stream; and the second switching control is configured to perform switching from the single-column display mode to the double-column display mode. The information processing method further includes:
displaying, when the second video stream is displayed in the double-column display mode, a third switching control in a non-video content display area of a second display interface displaying the second video stream, where the third switching control is configured to perform switching from the double-column display mode to the single-column display mode.

Here, the second switching control is a control configured to achieve switching from the single-column display mode to the double-column display mode. After a trigger operation on the second switching control being received, the execution entity may be triggered to perform a switching operation for switching from the single-column display mode to the double-column display mode.

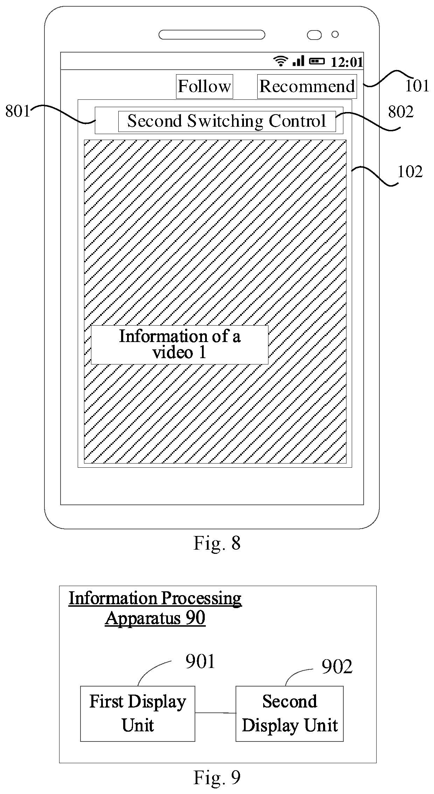

When the first video stream is displayed in the single-column display mode, the display mode switching information that is displayed may include the second switching control. Referring to Fig. 8, Fig. 8 is a schematic diagram of an application scenario. As shown in Fig. 8, the video content display area 102 of the first display interface 101 displays screen content and text content of the video 1. A second switching control 802 is displayed in a non-video content display area of the first display interface 101. When the user performs a trigger operation on the second switching control 802, the execution entity may perform switching to the double-column display mode as shown in Fig. 6 based on the user's trigger operation.

Referring to Fig. 6, when the second video stream is displayed in the double-column display mode, a third switching control 603 may be displayed in a non-video content display area of a second display interface 601. When the user performs a trigger operation on the third switching control, the execution entity may perform switching to the single-column display mode as shown in Fig. 8 based on the user's trigger operation.

Here, the third switching control is a control configured to achieve switching from the double-column display mode to the single-column display mode. After a trigger operation on the third switching control is received, the execution entity may be triggered to perform a switching operation for switching from the double-column display mode to the single-column display mode.

In these embodiments, the second switching control is displayed in the non-video content display area of the first display interface displaying the first video stream in the single-column display mode, and the third switching control is displayed in the non-video content display area of the second display interface displaying the second video stream in the double-column display mode, so that it facilitates switching between the single-column display mode and the double-column display mode for the user.

In some embodiments, switching animation is displayed during switching from the single-column display mode to the double-column display mode based on the trigger operation performed on the second switching control, and during switching from the double-column display mode to the single-column display mode based on the trigger operation performed on the third switching control.

The switching animation may be any animation, including one or more of graphics, images, or texts. A playing duration of the switching animation may persist until the display mode switching process ends. By displaying the switching animation in the display mode switching process, animation content can be displayed to the user in a process of loading page content to be switched to, which can alleviate negative experience of the user kept in a waiting state in the switching process.

In some embodiments, first switching guidance information is displayed after switching from the first display interface displaying the first video stream to the second display interface displaying the second video stream based on the second switching control, where the first switching guidance information is used to guide switching from the double-column display mode to the single-column display mode.

Second switching guidance information is displayed after switching from the second display interface displaying the second video stream to the first display interface displaying the first video stream based on the third switching control, where the second switching guidance information is used to guide switching from the single-column display mode to the double-column display mode.

The second switching guidance information on the first display interface may be information for guiding switching from the single-column display mode to the double-column display mode. For example, a guide icon is presented to the user to indicate the location of the second switching control 802 as shown in Fig. 8, along with accompanying text content for prompting that the second control 802 is configured to perform switching to the double-column display mode. Alternatively, only the text content for prompting that the second control is configured to perform switching to the double-column display mode is displayed near the second switching control 802.

The first switching guidance information on the second display interface may be information for guiding switching from the double-column display mode to the single-column display mode. For example, a guide icon is presented to the user to indicate the location of the third switching control 603 as shown in Fig. 6, along with accompanying text information for prompting that the third control is configured to perform switching to the single-column display mode. Alternatively, only the text information for prompting that the third control is configured to perform switching to the single-column display mode is displayed near the third switching control.

After the single-column display mode is switched to the double-column display mode, the first switching guidance information is displayed to guide switching from the double-column display mode to the single-column display mode, and after the double-column display mode being switched to the single-column display mode, the second switching guidance information is displayed to guide switching from the single-column display mode to the double-column display mode, so that the user can know how to use the switching controls described above to perform switching between different display modes. This especially facilitates the display mode switching for a first-time user.

In some embodiments, the first switching guidance information is set on a first overlay, and the first overlay covers a portion of the second display interface; and
the second switching guidance information is set on a second overlay, and the second overlay covers a portion of the first display interface, where the first overlay can be at least partially transparent to the second display interface, and the second overlay can be at least partially transparent to the first display interface.

In these embodiments, the first switching guidance information is displayed on the first overlay and the second switching guidance information is displayed on the second overlay, and the first overlay can be at least partially transparent to the second display interface and the second overlay can be at least partially transparent to the first display interface, so that it is possible to present the switching guidance information while presenting the first video stream to the user, thereby improving the information acquisition efficiency of the user.

In some embodiments, the first switching guidance information is highlighted on the first overlay; and the second switching guidance information is highlighted on the second overlay.

Taking highlighting the first switching guidance information on the first overlay as an example, the highlighting may include setting, on the first overlay, a first switching guidance information display area to be not transparent to content of the first display interface, for example, setting a transparency of the first switching guidance information display area to "0". Setting the transparency of the first switching guidance information display area to "0" can achieve highlighted display of the first switching guidance information; and/or the highlighting may include setting text in the first switching guidance information to a highlighted display style, such as displaying the text in bold font, or using a larger font size.

In these embodiments, highlighting the first switching guidance information on the first overlay, and highlighting the second switching guidance information on the second overlay can facilitate the first switching guidance information and the second switching guidance information being quickly browsed by the user, so as to assist the user in switching the display mode.

In some embodiments, when the second video stream is displayed in the double-column display mode in the second display interface, in response to receiving a swipe operation of a user, a fourth switching control configured to perform switching to the single-column display mode is displayed at the bottom of the second display interface.

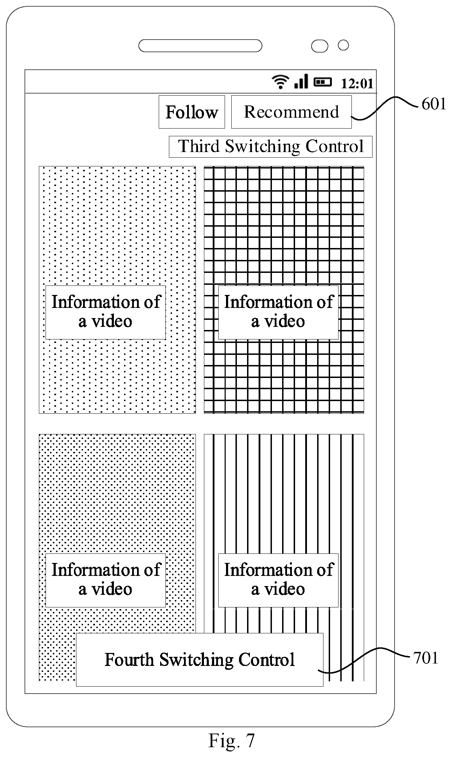

Here, the fourth switching control is a control configured to achieve switching from the double-column display mode to the single-column display mode. After a trigger operation on the fourth switching control is received, the execution entity may be triggered to perform a switching operation for switching from the double-column display mode to the single-column display mode. Referring to Fig. 6 and Fig. 7 together, Fig. 7 is a schematic diagram of an application scenario according to an embodiment of the present disclosure. In Fig. 6, the second video stream is displayed in the double-column display mode in the second display interface 601. The user can perform a swipe operation, such as a swipe-up operation, in the second display interface. When receiving the swipe operation, the execution entity may display a fourth switching control 701 in the second display interface, as shown in Fig. 7. The fourth switching control may be set at the bottom of the second display interface. The fourth switching control 701 is configured to perform switching from the double-column display mode to the single-column display mode. When receiving a trigger operation performed by the user on the fourth switching control 701, the execution entity may switch the second display interface displaying the second video stream in the double-column display mode to the first display interface displaying the first video stream in the single-column display mode.

In these embodiments, the fourth switching control is provided in the second display interface displaying the second video stream in the double-column display mode, which facilitates rapid switching from the double-column display mode to the single-column display mode.

In some embodiments, a display mode of displaying the first video stream in the single-column display mode includes full-screen display and non-full-screen display, where the second switching control is displayed when the first video stream is displayed in the non-full-screen display mode, and the second switching control is configured to perform switching from the single-column display mode to the double-column display mode.

Referring to Fig. 4 and Fig. 8 together, Fig. 8 is a schematic diagram of an application scenario according to an embodiment of the present disclosure. In Fig. 4, the first video stream is displayed in the full-screen display mode. When the first video stream is displayed in the full-screen display mode in the first display interface 101, the second switching control is not displayed on the upper side of the first video stream in the first display interface 101. When the second video stream is displayed in the non-full-screen display mode in the first display interface 101, the second switching control 802 is displayed on the upper side of the first video stream in the first display interface, as shown in Fig. 8.

In these embodiments, the second switching control is not displayed when in the full-screen display mode, so more details of the first video stream can be displayed, and the second switching control is displayed when in the non-full-screen display mode, so that it is convenient for the user to perform display mode switching.

In some embodiments, displaying the first video stream in the single-column display mode includes displaying the first video stream in the full-screen display mode; and the method further includes the following steps:
first, presenting, in the video content display area, third guidance information for guiding to the non-full-screen display mode;
second, displaying, in response to a trigger operation performed based on the third guidance information, the first video stream in the non-full-screen display mode, where when the first video stream is displayed in the non-full-screen display mode, a toolbar including the second switching control may be displayed.

The third guidance information may be displayed in the form of a pop-up window or a floating window. The third guidance information includes an operation that can be performed to adjust the display mode to the non-full-screen display mode. The third guidance information may be displayed at the top of a video display area. The third guidance information may include, for example: "Scroll down here to enter non-full-screen display mode."

With the third guidance information, the user may perform switching from the full-screen display mode to the non-full-screen display mode. As shown in Fig. 8, a toolbar 801 is displayed when in the non-full-screen display mode, where the toolbar includes a second switching control 802.

In these embodiments, the third guidance information is presented when in the full-screen display mode, so as to guide the user to perform switching from the full-screen display mode to the non-full-screen display mode, so that on the one hand, it is convenient for the user to switch the display mode, and on the other hand, it is convenient for the user to perform switching from the single-column display mode to the double-column display mode using the second control in the non-full-screen display mode.

In some embodiments, the method further includes:
determining a first display mode of the first video stream in the single-column display mode when the second video stream is displayed in the double-column display mode based on the received trigger operation that is performed on the display mode switching information; and
displaying the first video stream based on the first display mode in response to receiving a switching operation for switching from the double-column display mode to the single-column display mode, where the first display mode includes full-screen display or non-full-screen display.

In these embodiments, when the user performs switching from the single-column display mode to the double-column display mode, the first display mode of the first video stream in the single-column display mode may be determined. The first display mode includes the full-screen display mode or the non-full-screen display mode. The first display mode may be recorded. The first video stream may be displayed based on the first display mode when the user's switching operation for switching from the double-column display mode to the single-column display mode is received.

In these embodiments, the first display mode for the first video stream may be a display mode set by the user. After switching from the double-column display mode back to the single-column display mode is performed, displaying the first video stream in the previous first display mode better aligns with user's viewing habits, thereby avoiding the user from setting the display mode again, and thus improving user experience.

Corresponding to the information processing method in the embodiment shown above in Fig. 2, Fig. 9 is a structural block diagram of an information processing apparatus according to an embodiment of the present disclosure. For ease of illustration, only parts related to the embodiments of the present disclosure are shown. Referring to Fig. 9, the apparatus 90 includes: a first display unit 901 and a second display unit 902, where
the first display unit 901 is configured to present display mode switching information when a first video stream is displayed in a single-column display mode, and
the second display unit 902 is configured to display a second video stream in a double-column display mode based on a received trigger operation that is performed on the display mode switching information.

In some embodiments, the display mode switching information is located in a video content display area of a first display interface, and the first display interface is configured to display the first video stream; and
the display mode switching information covers at least part of a video content of a first video, the first video is a video displayed in the video content display area when the display mode switching information is presented, and the first video is a video in the first video stream.

In some embodiments, the video content display area presents the display mode switching information when displaying the first video in the first video stream, where
a plurality of videos in the second video stream belong to the same category label as the first video.

In some embodiments, the display mode switching information includes a switching card and/or a first switching control, where the switching card includes video recommendation information.

In some embodiments, the display mode switching information includes a switching card and a first switching control; and the second display unit 902 is further configured to:
display the second video stream in the double-column display mode on the display interface based on a received trigger operation performed on the switching card or on the first switching control.

In some embodiments, a first-positioned video in the second video stream is the first video.

In some embodiments, the display mode switching information includes a second switching control; the second switching control is located in a non-video content display area of the first display interface displaying the first video stream; and the second switching control is configured to perform switching from the single-column display mode to the double-column display mode.

The second display unit 902 is further configured to:
display, when the second video stream is displayed in the double-column display mode, a third switching control in a non-video content display area of a second display interface displaying the second video stream, where the third switching control is configured to perform switching from the double-column display mode to the single-column display mode.

In some embodiments, the second display unit 902 is further configured to:
display switching animation during switching from the single-column display mode to the double-column display mode based on a trigger operation performed on the second switching control, and during switching from the double-column display mode to the single-column display mode based on a trigger operation performed on the third switching control.

In some embodiments, the second display unit 902 is further configured to:
display first switching guidance information after switching from the first display interface displaying the first video stream to the second display interface displaying the second video stream based on the second switching control, where the first switching guidance information is used to guide switching from the double-column display mode to the single-column display mode; and
display second switching guidance information after switching from the second display interface displaying the second video stream to the first display interface displaying the first video stream based on the third switching control, where the second switching guidance information is used to guide switching from the single-column display mode to the double-column display mode.

In some embodiments, a display mode of displaying the first video stream in the single-column display mode includes a full-screen display mode and a non-full-screen display mode, where
the second switching control is displayed when the first video stream is displayed in the non-full-screen display mode, and the second switching control is configured to perform switching from the single-column display mode to the double-column display mode.

In some embodiments, displaying the first video stream in the single-column display mode includes displaying the first video stream in the full-screen display mode; and the second display unit 902 is further configured to:
present, in the video content display area, third guidance information for guiding to the non-full-screen display mode; and
display, in response to a trigger operation performed based on the third guidance information, the first video stream in the non-full-screen display mode, where in the non-full-screen display mode, a toolbar including the second switching control is displayed.

In some embodiments, the second display unit 902 is further configured to:
determine a first display mode of the first video stream in the single-column display mode when the second video stream is displayed in the double-column display mode based on the received trigger operation that is performed on the display mode switching information; and
display the first video stream based on the first display mode in response to receiving a switching operation for switching from the double-column display mode to the single-column display mode, where the first display mode includes full-screen display or non-full-screen display.

In some embodiments, the second display unit 902 is further configured to: when the second video stream is displayed in the double-column display mode in the second display interface, in response to receiving a swipe operation of a user, display, at the bottom of the second display interface, a fourth switching control configured to perform switching to the single-column display mode.

In order to implement the above-mentioned embodiments, an embodiment of the present disclosure further provides an electronic device.

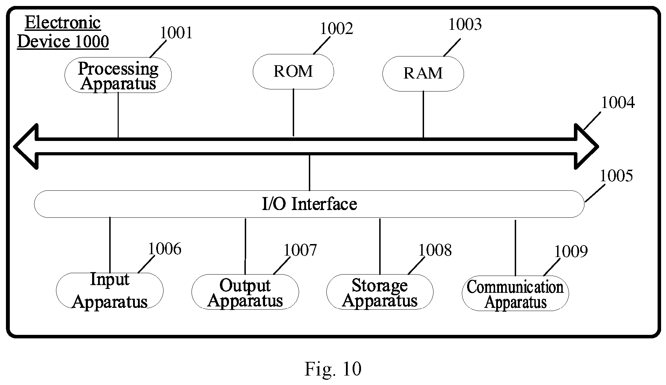

Referring to Fig. 10, a schematic structural diagram of an electronic device 1000 suitable for implementing the embodiments of the present disclosure is shown. The electronic device 1000 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 10 is merely an example, and shall not impose any limitation on the function and scope of use of the embodiments of the present disclosure.

As shown in Fig. 10, the electronic device 1000 may include a processing apparatus (for example, a central processing unit or a graphics processing unit) 1001 that may perform a variety of appropriate actions and processing based on a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to one another through a bus 1004. An input/output (I/O) interface 1005 is also connected to the bus 1004.

Generally, the following apparatus may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a magnetic tape and a hard disk drive; and a communication apparatus 1009. The communication apparatus 1009 may allow the electronic device 1000 to perform wireless or wired communication with other devices to exchange data. Although Fig. 10 shows the electronic device 1000 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1009, installed from the storage apparatus 1008, or installed from the ROM 1002. When the computer program is executed by the processing apparatus 1001, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, the first display unit may alternatively be described as "a unit configured to present display mode switching information when a first video stream is displayed in a single-column display mode".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an information processing method is provided. The method includes:
presenting display mode switching information when a first video stream is displayed in a single-column display mode; and
displaying a second video stream in a double-column display mode based on a received trigger operation that is performed on the display mode switching information.

According to one or more embodiments of the present disclosure, the display mode switching information is located in a video content display area of a first display interface, and the first display interface is configured to display the first video stream; and
the display mode switching information covers at least part of a video content of a first video, the first video is a video displayed in the video content display area when the display mode switching information is presented, and the first video is a video in the first video stream.

According to one or more embodiments of the present disclosure, the video content display area presents the display mode switching information when displaying the first video in the first video stream, where
a plurality of videos in the second video stream belong to the same category label as the first video.

According to one or more embodiments of the present disclosure, the display mode switching information includes a switching card and/or a first switching control, where the switching card includes video recommendation information.

According to one or more embodiments of the present disclosure, the display mode switching information includes the switching card and the first switching control, and displaying the second video stream in the double-column display mode based on the received trigger operation that is performed on the display mode switching information includes:
displaying the second video stream in the double-column display mode based on a received trigger operation performed on the switching card or on the first switching control.

According to one or more embodiments of the present disclosure, a first-positioned video in the second video stream is the first video.

According to one or more embodiments of the present disclosure, the display mode switching information includes a second switching control; the second switching control is located in a non-video content display area of the first display interface displaying the first video stream; and the second switching control is configured to perform switching from the single-column display mode to the double-column display mode. The method further includes:
displaying, when the second video stream is displayed in the double-column display mode, a third switching control in a non-video content display area of a second display interface displaying the second video stream, where the third switching control is configured to perform switching from the double-column display mode to the single-column display mode.

According to one or more embodiments of the present disclosure, the method further includes: displaying switching animation during switching from the single-column display mode to the double-column display mode based on a trigger operation performed on the second switching control, and during switching from the double-column display mode to the single-column display mode based on a trigger operation performed on the third switching control.

According to one or more embodiments of the present disclosure, the method further includes:
displaying first switching guidance information after switching from the first display interface displaying the first video stream to the second display interface displaying the second video stream based on the second switching control, where the first switching guidance information is used to guide switching from the double-column display mode to the single-column display mode; and
displaying second switching guidance information after switching from the second display interface displaying the second video stream to the first display interface displaying the first video stream based on the third switching control, where the second switching guidance information is used to guide switching from the single-column display mode to the double-column display mode.

According to one or more embodiments of the present disclosure, a display mode of displaying the first video stream in the single-column display mode includes a full-screen display mode and a non-full-screen display mode, where
the second switching control is displayed when the first video stream is displayed in the non-full-screen display mode, and the second switching control is configured to perform switching from the single-column display mode to the double-column display mode.

According to one or more embodiments of the present disclosure, displaying the first video stream in the single-column display mode includes displaying the first video stream in the full-screen display mode; and the method further includes:
presenting, in the video content display area, third guidance information for guiding to the non-full-screen display mode; and
displaying, in response to a trigger operation performed based on the third guidance information, the first video stream in the non-full-screen display mode, where in the non-full-screen display mode, a toolbar including the second switching control is displayed.

According to one or more embodiments of the present disclosure, the method further includes:
determining a first display mode of the first video stream in the single-column display mode when the second video stream is displayed in the double-column display mode based on the received trigger operation that is performed on the display mode switching information; and
displaying the first video stream based on the first display mode in response to receiving a switching operation for switching from the double-column display mode to the single-column display mode, where the first display mode includes full-screen display or non-full-screen display.

According to one or more embodiments of the present disclosure, the method further includes: when the second video stream is displayed in the double-column display mode in the second display interface, in response to receiving a swipe operation of a user, displaying, at the bottom of the second display interface, a fourth switching control configured to perform switching to the single-column display mode.

In a second aspect, according to one or more embodiments of the present disclosure, an information processing device is provided. The device includes:
a first display unit configured to present display mode switching information when a first video stream is displayed in a single-column display mode, and
a second display unit configured to display a second video stream in a double-column display mode based on a received trigger operation that is performed on the display mode switching information.

According to one or more embodiments of the present disclosure, the display mode switching information is located in a video content display area of a first display interface, and the first display interface is configured to display the first video stream; and
the display mode switching information covers at least part of a video content of a first video, the first video is a video displayed in the video content display area when the display mode switching information is presented, and the first video is a video in the first video stream.

According to one or more embodiments of the present disclosure, the video content display area presents the display mode switching information when displaying the first video, where a plurality of videos in the second video stream belong to the same category label as the first video.

According to one or more embodiments of the present disclosure, the display mode switching information includes a switching card and/or a first switching control, where the switching card includes video recommendation information.

According to one or more embodiments of the present disclosure, the display mode switching information includes a switching card and a first switching control, and the second display unit is further configured to:
display the second video stream in the double-column display mode on the display interface based on a received trigger operation performed on the switching card or on the first switching control.

According to one or more embodiments of the present disclosure, a first-positioned video in the second video stream is the first video.

According to one or more embodiments of the present disclosure, the display mode switching information includes a second switching control; the second switching control is located in a non-video content display area of the first display interface displaying the first video stream; and the second switching control is configured to perform switching from the single-column display mode to the double-column display mode.

The second display unit is further configured to:
display, when the second video stream is displayed in the double-column display mode, a third switching control in a non-video content display area of a second display interface displaying the second video stream, where the third switching control is configured to perform switching from the double-column display mode to the single-column display mode.

According to one or more embodiments of the present disclosure, the second display unit is further configured to:
display switching animation during switching from the single-column display mode to the double-column display mode based on a trigger operation performed on the second switching control, and during switching from the double-column display mode to the single-column display mode based on a trigger operation performed on the third switching control.

According to one or more embodiments of the present disclosure, the second display unit is further configured to:
display first switching guidance information after switching from the first display interface displaying the first video stream to the second display interface displaying the second video stream based on the second switching control, where the first switching guidance information is used to guide switching from the double-column display mode to the single-column display mode; and
display second switching guidance information after switching from the second display interface displaying the second video stream to the first display interface displaying the first video stream based on the third switching control, where the second switching guidance information is used to guide switching from the single-column display mode to the double-column display mode.

According to one or more embodiments of the present disclosure, a display mode of displaying the first video stream in the single-column display mode includes displaying the first video stream in a full-screen display mode and displaying the first video stream in a non-full-screen display mode, where the second switching control is displayed when the first video stream is displayed in the non-full-screen display mode, and the second switching control is configured to perform switching from the single-column display mode to the double-column display mode.

According to one or more embodiments of the present disclosure, displaying the first video stream in the single-column display mode includes displaying the first video stream in the full-screen display mode; and the second display unit is further configured to:
present, in the video content display area, third guidance information for guiding to the non-full-screen display mode; and
display, in response to a trigger operation performed based on the third guidance information, the first video stream in the non-full-screen display mode, where in the non-full-screen display mode, a toolbar including the second switching control is displayed.

According to one or more embodiments of the present disclosure, the second display unit is further configured to:
determine a first display mode of the first video stream in the single-column display mode when the second video stream is displayed in the double-column display mode based on the received trigger operation that is performed on the display mode switching information; and
display the first video stream based on the first display mode in response to receiving a switching operation for switching from the double-column display mode to the single-column display mode, where the first display mode includes full-screen display or non-full-screen display.

According to one or more embodiments of the present disclosure, the second display unit is further configured to: when the second video stream is displayed in the double-column display mode in the second display interface, in response to receiving a swipe operation of a user, display, at the bottom of the second display interface, a fourth switching control configured to perform switching to the single-column display mode.

In a third aspect, according to one or more embodiments of the present disclosure, an electronic device is provided. The device includes: at least one processor and a memory;
where the memory has computer-executable instructions stored therein; and
the at least one processor executes the computer-executable instructions stored in the memory, to cause the at least one processor to perform the information processing method according to the first aspect and various possible designs of the first aspect.

According to a fourth aspect, according to one or more embodiments of the present disclosure, a computer-readable storage medium is provided. The computer-readable storage medium has stored therein computer-executable instructions that, when executed by a processor, cause the information processing method according to the first aspect and various possible designs of the first aspect to be implemented.

According to a fifth aspect, according to one or more embodiments of the present disclosure, a computer program product is provided. The computer program product includes a computer program that, when executed by a processor, causes the information processing method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An information processing method, comprising:
presenting display mode switching information when a first video stream is displayed in a single-column display mode; and
displaying a second video stream in a double-column display mode based on a received trigger operation that is performed on the display mode switching information.

2. The method according to claim 1, wherein the display mode switching information is located in a video content display area of a first display interface, the first display interface being configured to display the first video stream; and
the display mode switching information covers at least part of a video content of a first video, the first video being a video displayed in the video content display area when the display mode switching information is presented, and the first video being a video in the first video stream.

3. The method according to claim 2, wherein the video content display area presents the display mode switching information when displaying the first video in the first video stream, wherein
a plurality of videos in the second video stream belong to the same category label as the first video.

4. The method according to claim 2 or 3, wherein the display mode switching information comprises at least one of a switching card or a first switching control, wherein
the switching card comprises video recommendation information.

5. The method according to any one of claims 2 to 4, wherein the display mode switching information comprises the switching card and the first switching control, and displaying the second video stream in the double-column display mode based on the received trigger operation that is performed on the display mode switching information comprises:
displaying the second video stream in the double-column display mode based on a received trigger operation performed on the switching card or on the first switching control.

6. The method according to any one of claims 2 to 5, wherein a first-positioned video in the second video stream is the first video.

7. The method according to any one of claims 1 to 6, wherein the display mode switching information comprises a second switching control, the second switching control being located in a non-video content display area of the first display interface displaying the first video stream; and the second switching control being configured to perform switching from the single-column display mode to the double-column display mode; and
the method further comprises:
displaying, when the second video stream is displayed in the double-column display mode, a third switching control in a non-video content display area of a second display interface displaying the second video stream, the third switching control being configured to perform switching from the double-column display mode to the single-column display mode.

8. The method according to claim 7, wherein the method further comprises:
displaying switching animation during switching from the single-column display mode to the double-column display mode based on a trigger operation performed on the second switching control, and during switching from the double-column display mode to the single-column display mode based on a trigger operation performed on the third switching control.

9. The method according to claim 7, wherein the method further comprises:
displaying first switching guidance information after switching from the first display interface displaying the first video stream to the second display interface displaying the second video stream based on the second switching control, the first switching guidance information being used to guide switching from the double-column display mode to the single-column display mode; and
displaying second switching guidance information after switching from the second display interface displaying the second video stream to the first display interface displaying the first video stream based on the third switching control, the second switching guidance information being used to guide switching from the single-column display mode to the double-column display mode.

10. The method according to any one of claims 1 to 9, wherein a display mode of displaying the first video stream in the single-column display mode comprises full-screen display and non-full-screen display, wherein
the second switching control is displayed when the first video stream is displayed in the non-full-screen display mode, and the second switching control is configured to perform switching from the single-column display mode to the double-column display mode.

11. The method according to claim 10, wherein displaying the first video stream in the single-column display mode comprises displaying the first video stream in the full-screen display mode; and the method further comprises:
presenting, in the video content display area, third guidance information for guiding to the non-full-screen display mode; and
displaying, in response to a trigger operation performed based on the third guidance information, the first video stream in the non-full-screen display mode, wherein in the non-full-screen display mode, a toolbar comprising the second switching control is displayed.

12. The method according to any one of claims 1 to 11, wherein the method further comprises:
determining a first display mode of the first video stream in the single-column display mode when the second video stream is displayed in the double-column display mode based on the received trigger operation that is performed on the display mode switching information; and
displaying the first video stream based on the first display mode in response to receiving a switching operation for switching from the double-column display mode to the single-column display mode, wherein the first display mode comprises full-screen display or non-full-screen display.

13. The method according to any one of claims 1 to 12, wherein the method further comprises:
when the second video stream is displayed in the double-column display mode in the second display interface, in response to receiving a swipe operation of a user, displaying, at the bottom of the second display interface, a fourth switching control configured to perform switching to the single-column display mode.

14. An information processing apparatus, comprising:
a first display unit configured to present display mode switching information when a first video stream is displayed in a single-column display mode, and
a second display unit configured to display a second video stream in a double-column display mode based on a received trigger operation that is performed on the display mode switching information.

15. An electronic device, comprising: a processor and a memory, wherein
the memory has computer-executable instructions stored therein; and
the processor executes the computer-executable instructions stored in the memory to cause the processor to perform the information processing method according to any one of claims 1 to 13.

16. A computer-readable storage medium having computer-executable instructions stored therein that, when executed by a processor, cause the information processing method according to any one of claims 1 to 13 to be implemented.

17. A computer program product, comprising a computer program that, when executed by a processor, causes the information processing method according to any one of claims 1 to 13 to be implemented.
